# FASCICULE DE BREVET EUROPEEN

(11) **EP 3 463 002 B1**
(45) Date de publication et mention de la délivrance du brevet: **19.08.2020**
(21) Numéro de dépôt: 17732978.6
(22) Date de dépôt: 29.05.2017
(51) Int. Cl.: A47J 27/04

(54) **ACCESSOIRE CUISEUR VAPEUR POUR CHAUFFER ET/OU CUIRE A LA VAPEUR DES ALIMENTS CONTENUS DANS UN RÉCIPIENT**
DÄMPFERZUBEHÖR ZUM DAMPFERHITZEN UND/ODER -DÄMPFEN VON LEBENSMITTELN IN EINEM BEHÄLTER
STEAMER ACCESSORY FOR STEAM-HEATING AND/OR STEAMING FOOD IN A CONTAINER

(30) Priorité: 31.05.2016 FR 1654920
(43) Date de publication de la demande: 10.04.2019
(73) Titulaire: SEB S.A., 69130 Ecully (FR)
(72) Inventeur: DELRUE, Olivier, 21260 SELONGEY (FR); GUEGAN, Laurent, 74150 LORNAY (FR); SARTOUT, Pierre, 21000 DIJON (FR); PRIETO, Guillaume, 21380 MARSANNAY LE BOIS (FR)
(74) Mandataire: Bourrières, Patrice
(86) Numéro de dépôt international: PCT/FR2017/051334
(87) Numéro de publication internationale: WO 2017/207907

(56) Documents cités:
- FR-A1- 2 786 083
- GB-A- 2 391 163
- US-A1- 2014 103 023

## Description

La présente invention concerne le domaine technique des appareils et dispositifs de production de vapeur pour chauffer et/ou cuire des aliments à la vapeur.

La présente invention concerne plus particulièrement les accessoires cuiseur vapeur pour chauffer et/ou cuire à la vapeur des aliments contenus dans un récipient.

La présente invention concerne également les appareils pour chauffer et/ou cuire à la vapeur des aliments, comportant un récipient associé à un dispositif de production de vapeur formant un tel accessoire cuiseur vapeur.

Il est connu du document US 2014/0103023 un appareil comportant un accessoire de production de vapeur utilisé pour chauffer et/ou cuire à la vapeur des aliments contenus dans un récipient. Cet accessoire de production de vapeur comprend un générateur de vapeur comportant une chambre de production de vapeur et un réservoir d'eau alimentant en eau la chambre de production de vapeur. La chambre de production de vapeur est reliée à des sorties de distribution de vapeur ménagées dans une partie inférieure du générateur de vapeur au dessus du récipient.

Un inconvénient de cet appareil réside dans le remplissage du réservoir d'eau du générateur de vapeur, qui doit être effectué avec précaution du fait de la présence du générateur de vapeur.

Un objet de la présente invention est de proposer un accessoire cuiseur vapeur utilisé avec un récipient pour chauffer et/ou cuire des aliments à la vapeur, dans lequel le remplissage du réservoir d'eau est facilité.

Un autre objet de la présente invention est de proposer un accessoire cuiseur vapeur utilisé avec un récipient pour chauffer et/ou cuire des aliments à la vapeur, qui présente une construction économique.

Un autre objet de la présente invention est de proposer un accessoire cuiseur vapeur utilisé avec un récipient pour chauffer et/ou cuire des aliments à la vapeur, qui présente de bonnes performances de production de vapeur.

Un autre objet de la présente invention est de proposer un cuiseur vapeur électrique pour chauffer et/ou cuire des aliments à la vapeur comportant un récipient et un accessoire cuiseur vapeur, dans lequel le remplissage du réservoir d'eau est facilité.

Un autre objet de la présente invention est de proposer un cuiseur vapeur électrique pour chauffer et/ou cuire des aliments à la vapeur comportant un récipient et un accessoire cuiseur vapeur, qui présente une construction économique.

Un autre objet de la présente invention est de proposer un cuiseur vapeur électrique pour chauffer et/ou cuire des aliments à la vapeur comportant un récipient et un accessoire cuiseur vapeur, qui présente de bonnes performances de production de vapeur.

Ces objets sont atteints avec un accessoire cuiseur vapeur pour chauffer et/ou cuire à la vapeur des aliments contenus dans un récipient, l'accessoire cuiseur vapeur comprenant un réservoir d'eau communiquant avec l'extérieur par un orifice de remplissage, l'accessoire cuiseur vapeur comprenant un générateur de vapeur comportant une chambre de production de vapeur reliée à au moins une sortie de distribution de vapeur ménagée dans une partie inférieure du générateur de vapeur, le réservoir d'eau communiquant avec la chambre de production de vapeur par une entrée d'alimentation en eau, du fait que la chambre de production de vapeur communique avec au moins une sortie d'évacuation de vapeur disposée plus haut que l'entrée d'alimentation en eau, que la chambre de production de vapeur est confinée au dessus de la ou des sortie(s) d'évacuation de vapeur, et que la ou chaque sortie d'évacuation de vapeur communique par un conduit avec la ou l'une des sortie(s) de distribution de vapeur, de sorte que la vapeur produite dans la chambre de production de vapeur s'échappe par la ou les sortie(s) d'évacuation de vapeur pour atteindre la ou les sortie(s) de distribution de vapeur en descendant par le ou les conduit(s). Ainsi l'eau versée dans le réservoir d'eau peut atteindre librement la chambre de production de vapeur ; l'eau atteignant la chambre de production de vapeur est transformée en vapeur ; la vapeur s'élève pour atteindre la ou les sorties d'évacuation de vapeur, puis traverse le ou les conduits pour atteindre la ou les sorties de distribution de vapeur. Un générateur de vapeur de construction particulièrement économique peut ainsi être obtenu. Ce générateur de vapeur présente de bonnes performances de production de vapeur. Le remplissage du réservoir d'eau est facilité.

Avantageusement alors, la chambre de production de vapeur communique avec la ou les sortie(s) d'évacuation de vapeur par une chambre d'expansion de vapeur disposée au dessus de la chambre de production de vapeur. Cette disposition permet de faciliter le cheminement de la vapeur. Avantageusement alors, une paroi latérale séparatrice est agencée entre l'orifice de remplissage et la chambre d'expansion de vapeur, et la paroi latérale séparatrice s'étend plus bas que la ou les sorties(s) d'évacuation de vapeur. Cette disposition permet de simplifier la construction de l'accessoire cuiseur vapeur.

Avantageusement alors, la paroi latérale séparatrice s'étend plus bas que l'entrée d'alimentation en eau. Cette disposition permet un meilleur confinement de la vapeur.

Selon une forme de réalisation, la paroi latérale séparatrice s'étend dans le réservoir d'eau. Cette disposition permet de simplifier la construction de l'accessoire cuiseur vapeur.

Avantageusement encore, le réservoir d'eau présente un fond déversant vers l'entrée d'alimentation en eau. Cette disposition permet une meilleure utilisation du volume du réservoir d'eau.

Avantageusement encore, la chambre de production de vapeur comporte un dispositif de chauffe. Si désiré, la chambre de production de vapeur peut comporter plusieurs dispositifs de chauffe.

Selon une forme de réalisation avantageuse, le dispositif de chauffe comprend un plot chauffant. Cette disposition permet d'obtenir une construction efficiente et particulièrement économique.

Avantageusement encore, le générateur de vapeur présente une paroi latérale extérieure et la chambre de production de vapeur est agencée dans le générateur de vapeur à distance de la paroi latérale extérieure. Ces dispositions permettent de limiter la température de la paroi latérale extérieure du générateur de vapeur.

Avantageusement encore, le réservoir d'eau entoure la chambre de production de vapeur. Cette disposition permet d'éviter la présence de parois latérales extérieures chaudes.

Avantageusement encore, le générateur de vapeur présente une paroi inférieure dans laquelle est/sont formée(s) la ou les sorties de distribution de vapeur, et la chambre de production de vapeur est agencée dans le générateur de vapeur à distance de la paroi inférieure. Cette disposition permet de loger plus aisément les composants électriques.

Avantageusement encore, le générateur de vapeur présente une surface d'appui annulaire inférieure. Cette disposition permet de poser le générateur de vapeur sur le bord supérieur d'un récipient.

Avantageusement encore, le générateur de vapeur présente au moins un évent mettant en communication la partie inférieure du générateur de vapeur avec une partie extérieure du générateur de vapeur s'étendant au dessus de la partie inférieure. Cette disposition permet de mieux contrôler l'échappement de la vapeur hors du récipient fermé par le générateur de vapeur. En alternative ou en complément, au moins un passage peut être ménagé entre le récipient et le générateur de vapeur, pour faciliter l'échappement de la vapeur hors du récipient.

Avantageusement alors, ledit au moins un évent est entouré par la surface d'appui annulaire inférieure. Cette disposition permet d'équilibrer la pression à l'intérieur du récipient fermé par le générateur de vapeur, tout en contrôlant l'échappement de vapeur hors du récipient fermé par le générateur de vapeur.

Avantageusement alors, ledit au moins un évent débouche dans la paroi latérale extérieure.

Ces objets sont également atteints avec un cuiseur vapeur électrique, comportant un récipient pour contenir les aliments à chauffer et/ou à cuire, et un couvercle présentant une face inférieure prévue pour être disposée sur le récipient, du fait que le couvercle comprend un accessoire cuiseur vapeur selon l'une au moins des caractéristiques précitées.

L'invention sera mieux comprise à l'étude d'un exemple de réalisation, pris à titre nullement limitatif, illustré dans les figures 1 à 3 annexées, dans lesquelles :
- la figure 1 est une vue en perspective éclatée et en coupe d'un exemple de réalisation d'un cuiseur vapeur électrique comportant un accessoire cuiseur vapeur selon l'invention,
- la figure 2 est une vue en perspective et en coupe de l'accessoire cuiseur vapeur illustré sur la figure 1, selon une autre orientation,
- la figure 3 est une vue en perspective et en coupe de l'accessoire cuiseur vapeur illustré sur les figures 1 et 2, selon une autre section de coupe.

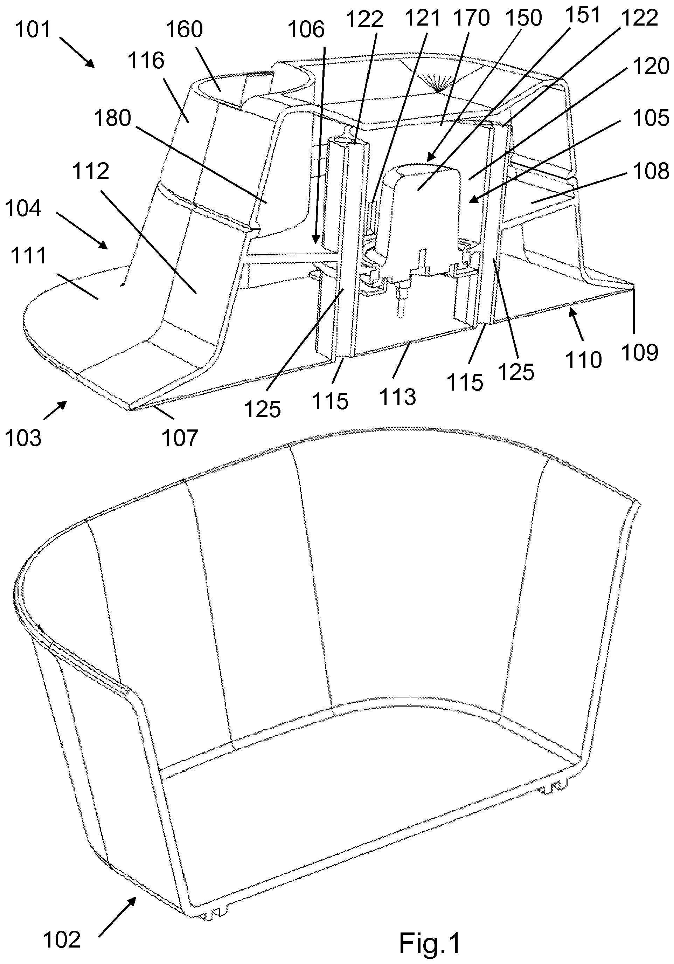

Le cuiseur vapeur électrique 101 illustré de manière schématique sur la figure 1 est un appareil pour chauffer et/ou cuire à la vapeur des aliments, comportant un récipient 102 pour contenir les aliments à chauffer et/ou à cuire, et un couvercle 103 prévu pour reposer sur le récipient 102. A cet effet, le couvercle 103 présente une face inférieure 107 prévue pour être disposée sur le récipient 102.

Le couvercle 103 comprend un accessoire cuiseur vapeur 104 pour chauffer et/ou cuire à la vapeur des aliments contenus dans le récipient 102.

Plus particulièrement dans l'exemple de réalisation illustré sur les figures 1 à 3, le couvercle 103 forme un accessoire cuiseur vapeur 104 pour chauffer et/ou cuire à la vapeur des aliments contenus dans le récipient 102. A titre de variante, le couvercle 103 peut notamment comporter un dispositif de support, si désiré amovible, prévu pour porter l'accessoire cuiseur vapeur 104, et pour reposer sur le récipient 102.

L'accessoire cuiseur vapeur 104 comprend un générateur de vapeur 105 et un réservoir d'eau 106. Le réservoir d'eau 106 communique avec l'extérieur par un orifice de remplissage 160. Si désiré, le réservoir d'eau 106 peut présenter au moins un autre orifice de remplissage.

Le générateur de vapeur 105 comporte une chambre de production de vapeur 120. Le réservoir d'eau 106 alimente en eau la chambre de production de vapeur 120 par gravité. A cet effet le réservoir d'eau 106 communique par une entrée d'alimentation en eau 121 avec la chambre de production de vapeur 120. Si désiré le réservoir d'eau 106 peut communiquer avec la chambre de production de vapeur 120 par au moins une autre entrée d'alimentation en eau.

De préférence, le réservoir d'eau 106 présente un fond 108 déversant vers l'entrée d'alimentation en eau 121.

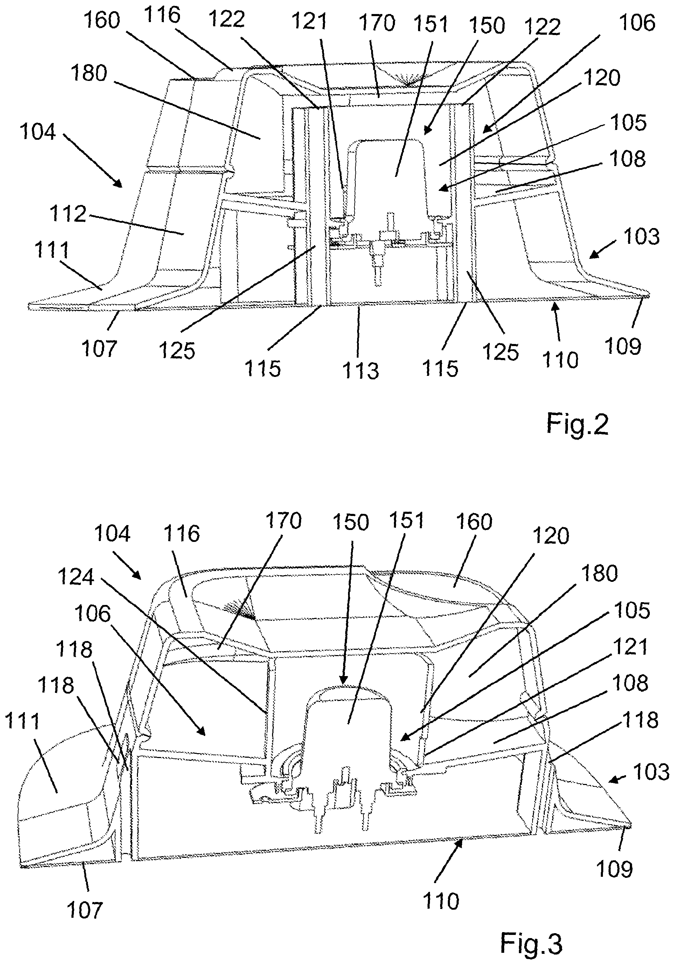

Dans l'exemple de réalisation illustré sur les figures 1 à 3, le réservoir d'eau 106 entoure la chambre de production de vapeur 120. A cet effet une paroi annulaire 124, mieux visible sur la figure 3, entoure la chambre de production de vapeur 120. L'entrée d'alimentation en eau 121 est formée dans la paroi annulaire 124.

La chambre de production de vapeur 120 comporte un dispositif de chauffe 150 pour transformer en vapeur l'eau présente dans la chambre de production de vapeur 120. Dans l'exemple de réalisation illustré sur les figures 1 à 3, le dispositif de chauffe 150 comprend un plot chauffant 151. A titre de variante, le dispositif de chauffe 150 peut notamment comporter un élément chauffant disposé sous une plaque de diffusion de chaleur et/ou dans une plaque de diffusion de chaleur formant au moins une partie du fond de la chambre de production de vapeur 120.

La chambre de production de vapeur 120 est reliée à au moins une sortie de distribution de vapeur 115 ménagée dans une partie inférieure 110 du générateur de vapeur 105. A cet effet, la chambre de production de vapeur 120 communique avec au moins une sortie d'évacuation de vapeur 122 disposée plus haut que l'entrée d'alimentation en eau 121. La chambre de production de vapeur 120 est confinée au dessus de la ou des sortie(s) d'évacuation de vapeur 122. La ou chaque sortie d'évacuation de vapeur 122 communique par un conduit 125 avec la ou l'une des sortie(s) de distribution de vapeur 115.

Plus particulièrement dans l'exemple de réalisation illustré sur les figures 1 à 3, la chambre de production de vapeur 120 communique avec la ou les sortie(s) d'évacuation de vapeur 122 par une chambre d'expansion de vapeur 170 disposée au dessus de la chambre de production de vapeur 120. En d'autres termes, ladite chambre d'expansion de vapeur est dépourvue de communication avec l'extérieur au dessus de ladite au moins une sortie d'évacuation de vapeur 122. Une paroi latérale séparatrice 180 est agencée entre l'orifice de remplissage 160 et la chambre d'expansion de vapeur 170 pour éviter les échappements de vapeur par l'orifice de remplissage 160. A cet effet, la paroi latérale séparatrice 180 s'étend plus bas que la ou les sorties(s) d'évacuation de vapeur 122. En d'autres termes, la paroi latérale séparatrice 180 s'étend en dessous de la ou des sortie(s) d'évacuation de vapeur 122. Plus particulièrement, la paroi latérale séparatrice 180 s'étend plus bas que l'entrée d'alimentation en eau 121. Tel que bien visible sur les figures 1 à 3, la paroi latérale séparatrice 180 s'étend dans le réservoir d'eau 106. En d'autres termes, l'eau peut atteindre les deux faces de la partie inférieure de la paroi latérale séparatrice 180.

Dans l'exemple de réalisation illustré sur les figures 1 à 3, la chambre de production de vapeur 120 présente plusieurs sorties d'évacuation de vapeur 122 disposées plus haut que l'entrée d'alimentation en eau 121 et communiquant par plusieurs conduits 125 avec les sorties de distribution de vapeur 115. Plus particulièrement, les conduits 125 sont ménagés dans la paroi annulaire 124. Deux groupes de trois conduits 125 sont disposés de part et d'autre du plot chauffant 151. Les conduits 125 sont verticaux. A titre de variante les conduits 125 peuvent être descendants sans nécessairement être verticaux. De préférence les conduits 125 sont dépourvus de chicanes. En d'autres termes, les conduits 125 sont descendants de manière continue, sans nécessairement être rectilignes.

Plus particulièrement, le générateur de vapeur 105 présente une surface d'appui annulaire inférieure 109 prévue pour reposer sur le récipient 102.

Le générateur de vapeur 105 présente une paroi inférieure 113 dans laquelle est/sont formée(s) la ou les sorties de distribution de vapeur 115. La chambre de production de vapeur 120 est agencée dans le générateur de vapeur 105 à distance de la paroi inférieure 113, ce qui permet une plus grande liberté dans la position des sorties de distribution de vapeur 115.

Le générateur de vapeur 105 présente au moins un évent 118 mettant en communication la partie inférieure 110 du générateur de vapeur 105 avec une partie extérieure 111 du générateur de vapeur 105 s'étendant au dessus de la partie inférieure 110. Ledit au moins un évent 118 est entouré par la surface d'appui annulaire inférieure 109.

Le générateur de vapeur 105 présente une paroi latérale extérieure 112. Le fond 108 du réservoir d'eau 106 relie la paroi latérale extérieure 112 à la paroi annulaire 124. La chambre de production de vapeur 120 est agencée dans le générateur de vapeur 105 à distance de la paroi latérale extérieure 112. Ledit au moins un évent 118 débouche dans la paroi latérale extérieure 112.

Dans l'exemple de réalisation illustré sur les figures 1 à 3, le générateur de vapeur 105 présente plusieurs évents 118 mettant en communication la partie inférieure 110 du générateur de vapeur 105 avec la partie extérieure 111 du générateur de vapeur 105. La partie inférieure 110 forme la paroi inférieure 113. La partie extérieure 111 forme la paroi latérale extérieure 112. Deux groupes de trois évents 118 sont disposés de part et d'autre du réservoir d'eau 106 entourant la chambre de production de vapeur 120.

L'accessoire cuiseur vapeur 104 présente une paroi supérieure 116 avantageusement réalisée en matière transparente ou translucide. La paroi supérieure 116 est assemblée avec la paroi latérale extérieure 112, par exemple par clipsage, par collage, par surmoulage, par vissage ou par soudage. La paroi supérieure 116 forme une partie du réservoir d'eau 106. La paroi latérale séparatrice 180 est issue de la paroi supérieure 116. La paroi supérieure 116 forme la partie supérieure de la chambre d'expansion de vapeur 170.

Le cuiseur vapeur électrique 101 illustré sur la figure 1 et l'accessoire cuiseur vapeur 104 illustré sur les figures 1 à 3 fonctionnent et s'utilisent de la manière suivante.

L'utilisateur dispose l'accessoire cuiseur vapeur 104 sur le récipient 102 après avoir disposé les aliments dans le récipient 102. L'utilisateur remplit le réservoir d'eau 106 par l'orifice de remplissage 160. L'eau s'écoule par l'entrée d'alimentation en eau 121 dans la chambre de production de vapeur 120. De préférence, l'utilisateur remplit le réservoir d'eau 106 jusqu'à un niveau suffisamment inférieur aux sorties d'évacuation de vapeur 122, pour éviter que l'eau atteigne les sorties d'évacuation de vapeur 122 et s'écoule par les conduits 125. L'utilisateur met alors en marche le dispositif de chauffe 150. La température de l'eau présente dans la chambre de production de vapeur 120 s'élève jusqu'à ce que de la vapeur soit produite. La vapeur s'élève depuis la chambre de production de vapeur 120 pour atteindre la chambre d'expansion de vapeur 170. La vapeur est alors confinée par la paroi supérieure 116, par la paroi latérale séparatrice 180 et par l'eau présente dans le réservoir d'eau 106. La vapeur s'échappe alors par les sorties d'évacuation de vapeur 122 pour atteindre les sorties de distribution de vapeur 115 en descendant par les conduits 125. La vapeur sortant des sorties de distribution de vapeur 115 se répand dans le récipient 102. L'air présent au dessus des aliments peut s'échapper par les évents 118. Lorsque les aliments sont saturés en vapeur, la vapeur s'échappe également par les évents 118.

Si désiré, la chambre de production de vapeur 120 peut comporter plusieurs dispositifs de chauffe.

A titre de variante, le générateur de vapeur 105 ne comporte pas nécessairement au moins un évent 118. En alternative ou en complément, au moins un passage peut être ménagé entre le couvercle 103 et le récipient 102, par exemple entre le générateur de vapeur 105 et le récipient 102, pour permettre à la vapeur de s'échapper hors du récipient 102.

Si désiré le générateur de vapeur 105 peut comporter un dispositif de support amovible par rapport à la chambre de production de vapeur 120, de sorte que la chambre de production de vapeur 120 repose sur ledit dispositif de support et que ledit dispositif de support présente au moins une portion de surface d'appui prévue pour reposer sur un récipient. Le dispositif de support peut notamment présenter une configuration annulaire ou une configuration en U. En alternative, le dispositif de support amovible peut notamment appartenir au couvercle 103.

La présente invention n'est nullement limitée à l'exemple de réalisation décrit et à ses variantes, mais englobe de nombreuses modifications dans le cadre des revendications.

## Revendications

1. Accessoire cuiseur vapeur (104) pour chauffer et/ou cuire à la vapeur des aliments contenus dans un récipient (102), l'accessoire cuiseur vapeur (104) comprenant un réservoir d'eau (106) communiquant avec l'extérieur par un orifice de remplissage (160), l'accessoire cuiseur vapeur (104) comprenant un générateur de vapeur (105) comportant une chambre de production de vapeur (120) reliée à au moins une sortie de distribution de vapeur (115) ménagée dans une partie inférieure (110) du générateur de vapeur (105), le réservoir d'eau (106) communiquant avec la chambre de production de vapeur (120) par une entrée d'alimentation en eau (121), **caractérisé en ce que** la chambre de production de vapeur (120) communique avec au moins une sortie d'évacuation de vapeur (122) disposée plus haut que l'entrée d'alimentation en eau (121), **en ce que** la chambre de production de vapeur (120) est confinée au dessus de la ou des sortie(s) d'évacuation de vapeur (122), et **en ce que** la ou chaque sortie d'évacuation de vapeur (122) communique par un conduit (125) avec la ou l'une des sortie(s) de distribution de vapeur (115), de sorte que la vapeur produite dans la chambre de production de vapeur (120) s'échappe par la ou les sortie(s) d'évacuation de vapeur (122) pour atteindre la ou les sortie(s) de distribution de vapeur (115) en descendant par le ou les conduit(s) (125).

2. Accessoire cuiseur vapeur (104) selon la revendication 1, **caractérisé en ce que** la chambre de production de vapeur (120) communique avec la ou les sortie(s) d'évacuation de vapeur (122) par une chambre d'expansion de vapeur (170) disposée au dessus de la chambre de production de vapeur (120).

3. Accessoire cuiseur vapeur (104) selon la revendication 2, **caractérisé en ce qu'**une paroi latérale séparatrice (180) est agencée entre l'orifice de remplissage (160) et la chambre d'expansion de vapeur (170), et **en ce que** la paroi latérale séparatrice (180) s'étend plus bas que la ou les sorties(s) d'évacuation de vapeur (122).

4. Accessoire cuiseur vapeur (104) selon la revendication 3, **caractérisé en ce que** la paroi latérale séparatrice (180) s'étend plus bas que l'entrée d'alimentation en eau (121).

5. Accessoire cuiseur vapeur (104) selon l'une des revendications 3 ou 4, **caractérisé en ce que** la paroi latérale séparatrice (180) s'étend dans le réservoir d'eau (106).

6. Accessoire cuiseur vapeur (104) selon l'une des revendications 1 à 5, **caractérisé en ce que** le réservoir d'eau (106) présente un fond (108) déversant vers l'entrée d'alimentation en eau (121).

7. Accessoire cuiseur vapeur (104) selon l'une des revendications 1 à 6, **caractérisé en ce que** la chambre de production de vapeur (120) comporte un dispositif de chauffe (150).

8. Accessoire cuiseur vapeur (104) selon la revendication 7, **caractérisé en ce que** le dispositif de chauffe (150) comprend un plot chauffant (151).

9. Accessoire cuiseur vapeur (104) selon l'une des revendications 1 à 8, **caractérisé en ce que** le générateur de vapeur (105) présente une paroi latérale extérieure (112) et **en ce que** la chambre de production de vapeur (120) est agencée dans le générateur de vapeur (105) à distance de la paroi latérale extérieure (112).

10. Accessoire cuiseur vapeur (104) selon l'une des revendications 1 à 9, **caractérisé en ce que** le réservoir d'eau (106) entoure la chambre de production de vapeur (120).

11. Accessoire cuiseur vapeur (104) selon l'une des revendications 1 à 10, **caractérisé en ce que** le générateur de vapeur (105) présente une paroi inférieure (113) dans laquelle est/sont formée(s) la ou les sorties de distribution de vapeur (115) et **en ce que** la chambre de production de vapeur (120) est agencée dans le générateur de vapeur (105) à distance de la paroi inférieure (113).

12. Accessoire cuiseur vapeur (104) selon l'une des revendications 1 à 11, **caractérisé en ce que** le générateur de vapeur (105) présente une surface d'appui annulaire inférieure (109).

13. Accessoire cuiseur vapeur (104) selon l'une des revendications 1 à 12, **caractérisé en ce que** le générateur de vapeur (105) présente au moins un évent (118) mettant en communication la partie inférieure (110) du générateur de vapeur (105) avec une partie extérieure (111) du générateur de vapeur (105) s'étendant au dessus de la partie inférieure (110).

14. Accessoire cuiseur vapeur (104) selon les revendications 12 et 13, **caractérisé en ce que** ledit au moins un évent (118) est entouré par la surface d'appui annulaire inférieure (109).

15. Cuiseur vapeur électrique (101), comportant un récipient (102) pour contenir les aliments à chauffer et/ou à cuire, et un couvercle (103) présentant une face inférieure (107) prévue pour être disposée sur le récipient (102), **caractérisé en ce que** le couvercle (103) comprend un accessoire cuiseur vapeur (104) selon l'une des revendications 1 à 14.

## Patentansprüche

1. Dampfgarerzubehör (104) zum Erhitzen und / oder zum Dampfgaren von in einem Behälter (102) enthaltenen Lebensmitteln, wobei das Dampfgarerzubehör (104) einen Wassertank (106) umfasst, der mit dem Äußeren über eine Füllöffnung (160) in Verbindung steht, wobei das Dampfgarerzubehör (104) einen Dampferzeuger (105) umfasst, der eine Dampferzeugungskammer (120) aufweist, die mit mindestens einem Dampfverteilungsauslass (115) verbunden ist, der in einem unteren Teil (110) des Dampferzeugers (105) ausgebildet ist, wobei der Wassertank (106) über einen Wasserzulauf (121) mit der Dampferzeugungskammer (120) in Verbindung steht, **dadurch gekennzeichnet, dass** die Dampferzeugungskammer (120) mit mindestens einem Dampfauslass (122) in Verbindung steht, der höher als der Wasserzulauf (121) angeordnet ist, dass die Dampferzeugungskammer (120) oberhalb des Dampfauslasses oder der Dampfauslässe (122) angrenzt, und dass der Dampfauslass oder jeder Dampfauslass (122) durch eine Leitung (125) mit dem Dampfverteilungsauslass oder einem der Dampfverteilungsauslässe (115) in Verbindung steht, so dass der Dampf, der von der Dampferzeugungskammer (120) erzeugt wird, durch den Dampfauslass oder die Dampfauslässe (122) entweicht, um den Dampfverteilungsauslass oder die Dampfverteilungsauslässe (115) beim Heruntersteigen durch die Leitung oder die Leitungen (125) zu erreichen.

2. Dampfgarerzubehör (104) nach Anspruch 1, **dadurch gekennzeichnet, dass** die Dampferzeugungskammer (120) mit dem Dampfauslass oder den Dampfauslässen (122) über eine Dampfexpansionskammer (170) in Verbindung steht, die oberhalb der Dampferzeugungskammer (120) angeordnet ist.

3. Dampfgarerzubehör (104) nach Anspruch 2, **dadurch gekennzeichnet, dass** zwischen der Füllöffnung (160) und der Dampfexpansionskammer (170) eine seitliche Trennwand (180) angeordnet ist, und dass sich die seitliche Trennwand (180) tiefer als der Dampfauslass oder die Dampfauslässe (122) erstreckt.

4. Dampfgarerzubehör (104) nach Anspruch 3, **dadurch gekennzeichnet, dass** sich die seitliche Trennwand (180) tiefer als der Wasserzulauf (121) erstreckt.

5. Dampfgarerzubehör (104) nach einem der Ansprüche 3 oder 4, **dadurch gekennzeichnet, dass** sich die seitliche Trennwand (180) in den Wassertank (106) erstreckt.

6. Dampfgarerzubehör (104) nach einem der Ansprüche 1 bis 5, **dadurch gekennzeichnet, dass** der Wassertank (106) einen Boden (108) vorweist, der zum Wasserversorgungseinlass (121) abfließen lässt.

7. Dampfgarerzubehör (104) nach einem der Ansprüche 1 bis 6, **dadurch gekennzeichnet, dass** die Dampferzeugungskammer (120) eine Heizvorrichtung (150) aufweist.

8. Dampfgarerzubehör (104) nach Anspruch 7, **dadurch gekennzeichnet, dass** die Heizvorrichtung (150) ein Heizelement (151) umfasst.

9. Dampfgarerzubehör (104) nach einem der Ansprüche 1 bis 8, **dadurch gekennzeichnet, dass** der Dampferzeuger (105) eine äußere Seitenwand (112) vorweist, und dass die Dampferzeugungskammer (120) in dem Dampferzeuger (105) im Abstand von der äußeren Seitenwand (112) angeordnet ist.

10. Dampfgarerzubehör (104) nach einem der Ansprüche 1 bis 9, **dadurch gekennzeichnet, dass** der Wassertank (106) die Dampferzeugungskammer (120) umgibt.

11. Dampfgarerzubehör (104) nach einem der Ansprüche 1 bis 10, **dadurch gekennzeichnet, dass** der Dampferzeuger (105) eine untere Wand (113) vorweist, in der der Dampfverteilungsauslass (115) ausgebildet ist oder die Dampfverteilungsauslässe ausgebildet sind, und dass die Dampferzeugungskammer (120) in dem Dampferzeuger (105) im Abstand von der Bodenwand (113) angeordnet ist.

12. Dampfgarerzubehör (104) nach einem der Ansprüche 1 bis 11, **dadurch gekennzeichnet, dass** der Dampferzeuger (105) eine untere ringförmige Auflagefläche (109) vorweist.

13. Dampfgarerzubehör (104) nach einem der Ansprüche 1 bis 12, **dadurch gekennzeichnet, dass** der Dampferzeuger (105) mindestens eine Entlüftung (118) vorweist, die den unteren Teil (110) des Dampferzeugers (105) mit einem äußeren Teil (111) des Dampferzeugers (105) verbindet, der sich oberhalb des unteren Teils (110) erstreckt.

14. Dampfgarerzubehör (104) nach den Ansprüchen 12 und 13, **dadurch gekennzeichnet, dass** die mindestens eine Entlüftung (118) von der unteren ringförmigen Auflagefläche (109) umgeben ist.

15. Elektrischer Dampfgarer (101), aufweisend einen Behälter (102) zum Aufnehmen der zu erhitzenden und / oder zu garenden Lebensmittel und eine Abdeckung (103), die eine Unterseite (107) vorweist, die zum Anordnen auf dem Behälter (102) vorgesehen ist, **dadurch gekennzeichnet, dass** die Abdeckung (103) ein Dampfgarerzubehör (104) gemäß einem der Ansprüche 1 bis 14 umfasst.

## Claims

1. Steamer accessory (104) for steam-heating and/or steaming foods in a container (102), the steamer accessory (104) comprising a water reservoir (106) communicating with the outside via a filling orifice (160), the steamer accessory (104) comprising a steam generator (105) comprising a steam production chamber (120) connected to at least one steam distribution outlet (115) provided in a lower part (110) of the steam generator (105), the water reservoir (106) communicating with the steam production chamber (120) via a water supply inlet (121), **characterised in that** the steam production chamber (120) communicates with at least one steam evacuation outlet (122) arranged higher than the water supply inlet (121), **in that** the steam production chamber (120) is confined above the steam evacuation outlet(s) (122), and **in that** the or each steam evacuation outlet (122) communicates via a duct (125) with the or one of the steam distribution outlet(s) (115), such that the steam produced in the steam production chamber (120) is evacuated via the steam evacuation outlet(s) (122) to reach the steam distribution outlet(s) (115) by descending through the duct(s) (125).

2. Steamer accessory (104) according to claim 1, **characterised in that** the steam production chamber (120) communicates with the steam evacuation outlet(s) (122) via a steam expansion chamber (170) positioned above the steam production chamber (120).

3. Steamer accessory (104) according to claim 2, **characterised in that** a separating side wall (180) is arranged between the filling orifice (160) and the steam expansion chamber (170), and **in that** the separating side wall (180) extends lower than the steam evacuation outlet(s) (122).

4. Steamer accessory (104) according to claim 3, **characterised in that** the separating side wall (180) extends lower than the water supply inlet (121).

5. Steamer accessory (104) according to one of claims 3 or 4, **characterised in that** the separating side wall (180) extends into the water reservoir (106).

6. Steamer accessory (104) according to one of claims 1 to 5, **characterised in that** the water reservoir (106) has a bottom (108) discharging towards the water supply inlet (121).

7. Steamer accessory (104) according to one of claims 1 to 6, **characterised in that** the steam production chamber (120) comprises a heating device (150).

8. Steamer accessory (104) according to claim 7, **characterised in that** the heating device (150) comprises a heating pad (151).

9. Steamer accessory (104) according to one of claims 1 to 8, **characterised in that** the steam generator (105) has an external side wall (112) and **in that** the steam production chamber (120) is arranged in the steam generator (105) at a distance from the external side wall (112).

10. Steamer accessory (104) according to one of claims 1 to 9, **characterised in that** the water reservoir (106) surrounds the steam production chamber (120).

11. Steamer accessory (104) according to one of claims 1 to 10, **characterised in that** the steam generator (105) has a lower wall (113) in which the steam distribution outlet(s) (115) is/are formed and **in that** the steam production chamber (120) is arranged in the steam generator (105) at a distance from the lower wall (113).

12. Steamer accessory (104) according to one of claims 1 to 11, **characterised in that** the steam generator (105) has an annular lower bearing surface (109).

13. Steamer accessory (104) according to one of claims 1 to 12, **characterised in that** the steam generator (105) has at least one vent (118) bringing the lower part (110) of the steam generator (105) into communication with an external part (111) of the steam generator (105) extending above the lower part (110).

14. Steamer accessory (104) according to claims 12 and 13, **characterised in that** said at least one vent (118) is surrounded by the annular lower bearing surface (109).

15. Electric steamer (101), comprising a container (102) to contain the foods to be heated and/or steamed, and a lid (103) with a lower face (107) provided to be positioned on the container (102), **characterised in that** the lid (103) comprises a steamer accessory (104) according to one of claims 1 to 14.
